(19) Europäisches Patentamt
European Patent Office
Office européen des brevets

(11) EP 1 610 910 B1

(12) # EUROPÄISCHE PATENTSCHRIFT

(45) Veröffentlichungstag und Bekanntmachung des Hinweises auf die Patenterteilung:
**28.05.2008 Patentblatt 2008/22**

(21) Anmeldenummer: **04716549.3**

(22) Anmeldetag: **03.03.2004**

(51) Int Cl.:
***B05D 1/26*** *(2006.01)* ***B05D 3/06*** *(2006.01)*
***C09J 7/02*** *(2006.01)* ***B29C 47/00*** *(2006.01)*

(86) Internationale Anmeldenummer:
**PCT/EP2004/002097**

(87) Internationale Veröffentlichungsnummer:
**WO 2004/087337 (14.10.2004 Gazette 2004/42)**

(54) **VERFAHREN ZUR HERSTELLUNG VON STRUKTURIERTEN HAFTKLEBEMASSEN SOWIE DEREN VERWENDUNG**

METHOD FOR PRODUCING STRUCTURED ADHESIVE MATERIALS AND THE USE OF THE SAME

PROCEDE DE PRODUCTION DE MATIERES AUTO-ADHESIVES STRUCTUREES ET LEUR UTILISATION

(84) Benannte Vertragsstaaten:
**AT BE BG CH CY CZ DE DK EE ES FI FR GB GR HU IE IT LI LU MC NL PL PT RO SE SI SK TR**

(30) Priorität: **31.03.2003 DE 10314764**

(43) Veröffentlichungstag der Anmeldung:
**04.01.2006 Patentblatt 2006/01**

(73) Patentinhaber: **tesa AG**
**20253 Hamburg (DE)**

(72) Erfinder:
- **HUSEMANN, Marc**
  **22605 Hamburg (DE)**
- **ZÖLLNER, Stephan**
  **21244 Buchholz/Nordheide (DE)**

(74) Vertreter: **Stubbe, Andreas**
**tesa AG,**
**Kst. 9500 - Bf. 645,**
**Quickbornstrasse 24**
**20253 Hamburg (DE)**

(56) Entgegenhaltungen:

| | |
|---|---|
| **EP-A- 0 670 356** | **WO-A-01/53422** |
| **WO-A-02/02709** | **DE-A- 10 008 844** |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur Herstellung von strukturierten Haftklebemassen insbesondere Acrylathaftklebemassen, deren Verwendung zur Herstellung von Haftklebebändern sowie Haftklebebänder, die eine derartige Haftklebemasse umfassen.

Für Acrylathaftklebemassen existiert eine Vielzahl von Anwendungen. So finden diese Haftklebebänder Anwendung in Automobilen, Schiffen, Flugzeugen, im Häuserbau, im elektrischen Bereich sowie zur Verbindung von mechanischen Teilen.

Je nach Anwendung besitzen diese Acrylathaftklebemassen ganz unterschiedliche Eigenschaften. Für permanente Verklebungen sind häufig hohe Klebkräfte erforderlich und die Haftklebemasse sollte zudem eine hohe innere Festigkeit (Kohäsion) besitzen. Andere Verklebungen werden nur temporär vorgenommen, d. h. hierfür sind in der Regel geringere Klebkräfte erforderlich. Ein besonders interessantes Gebiet stellen Haftkiebemassen mit anisotropen Eigenschaften dar. Hier bilden Haftklebemassen in eine Richtung bedeutend höhere oder niedrigere Klebkräfte aus. Dies kann sehr nützlich sein, da in einer Belastungsrichtung sehr hohe Klebkräfte realisiert werden können und die Verklebung somit sehr stabil ist, aber in einer anderen Richtung die Verklebung wiederum leicht abgelöst werden kann.

Methoden der Strukturierung sind aus der Lithographie schon seit langem bekannt. In den Patenten US 5,910,392 US 5,861,231; US 4,968,581; US 4,883,740; US 4,810,613 und US 4,491,628 werden z. B. solche Methoden beschrieben. Diese lassen sich aber in einem Prozess zur Herstellung von Haftklebebändern nur schwer inkoperieren.

In DE 100 08 844.9 und DE 100 08 840.6 werden Prozesse zur Strukturierung von Acrylathaftklebemassen beschrieben. Mit diesen lassen sich aber keine anisotropen Eigenschaften erzielen.

Die Schriften WO 02/02709 A und EP 0 670 356 A offenbaren Verfahren zur Herstellung von anisotropen Haftklebemassen, wobei die Haftklebemassen mittels einer Düse zu einer Schicht extrudiert und anschließend mit Elektronenstrahlen vernetzt wird. Die DE 100 08 844 A offenbart vernetzte Acrylathaftklebemassen mit Schichtstruktur und anisotropen Klebeeeigenschaften. Es wird aber jeweils keine Oberflächenstrukturierung beschrieben.

Die WO 01/53422 A zeigt Haftklebeartikel mit einer strukturierten Oberfläche. Die Klebkraft der Artikel ist richtungsabhängig.

Der Erfindung liegt somit die Aufgabe zugrunde, ein Verfahren zur Herstellung von strukturierten Haftklebmessen anzugeben, die anisotrope Klebeigenschaften aufweisen. Darüber hinaus sollen Verwendungen derartiger Haftklebemasse sowie Haftklebebänder, die derartige Haftklebemasse umfassen, angegeben werden.

Diese Aufgabe wird durch die Merkmale der Ansprüche 1 und 9 gelöst. Zweckmäßige Ausgestaltungen der Erfindungen ergeben sich aus den Merkmalen der Ansprüche 2 bis 8.

Nach Maßgabe der Erfindung ist ein Verfahren zur Herstellung von strukturierten Haftklebemassen vorgesehen, bei dem die Haftklebemasse aus der Schmelze durch eine Düse beschichtet wird, durch die Düse strukturiert wird und anschließend mit actinischer Strahlung vernetzt wird, wobei runde, ovale, eckige, rechteckige, quadratische, dreieckige oder sägezahnförmige Strukturen auf der Haftklebemassenoberfläche erzeugt werden.

Bei der Haftklebemasse handelt es sich vorzugsweise um eine Acrylathaftklebemasse.

Fig.1 zeigt verschiedene Querschnitte von Düsen a bis 1, die vorteilhaft für das erfindungsgemäße Verfahren verwendet werden.

Zweckmäßigerweise umfasst das erfindungsgemäße Verfahren (a) das Beschichten einer Haftklebemasse, vorzugsweise einer Acrylathaftklebemasse, aus der Schmelze durch eine strukturierte Düse auf ein Trägermaterial oder Wasser und (b) das Einfrieren der so erhaltenen strukturierten Haftklebemasse auf dem Trägermaterial oder dem Wasser mittels Vernetzung mit actinischer Strahlung.

Erfindungsgemäß wird dieses Verfahren bevorzugt in einer Anlage durchgeführt, die eine Düse umfaßt, die am Düsenausgang ein Strukturelement trägt, welches auf die Haftklebemasse übertragen werden soll und einer Vemetzungseinheit, die bevorzugt aus UV-Strahlem und/oder Elektronenbeschleunigern besteht.

In einer bevorzugten Ausführungsform besitzen die Düsen zur Beschichtung aus der Schmelze die in Fig. 1 dargestellten Austrittsstrukturen. Durch diese Ausformung in der Düse oder am Düsenaustritt wird die Struktur in der Haftklebemasse erzeugt. Die erzeugten Strukturen werden entsprechend dem Spiegelbild in der Düse befindlichen Ausbuchtungen geformt. Die Ausformung erfolgt in der Längsrichtung, also parallel zur Strömungsrichtung. Weiterhin können die oben dargestellten Strukturen erzeugt werden. Auf diesem Weg lassen sich somit runde, ovale, eckige, rechteckige, quadratische, dreieckige, zackige, sägezahnförmige oder kantige Strukturen erzeugen. Die Haftklebemasse kann auf der Oberseite strukturiert sein, auf der Unterseite strukturiert sein und sowohl auf der Oberseite als auch der Unterseite strukturiert sein.

Die erzeugten Strukturen können auch von den oben dargestellten Mustern abweichen, d. h. sich z. B. in der Form und in der Größe unterscheiden. Durch den Beschichtungsprozess erfolgt aber eine Ausrichtung immer in Längsrichtung.

Zur Beschichtung werden bevorzugt Acrylathaftklebemassen eingesetzt Die Polymere besitzen bevorzugt folgende Zusammensetzung:

Acrylsäureester und/oder Methacrylsäureester bzw. deren freien Säuren mit der folgenden Formel

$$CH_2 = C(R_1)(COOR_2),$$

wobei $R_1$ = H oder $CH_3$ und $R_2$ eine Alkylkette mit 1 - 30 C-Atomen oder H ist, mit einem Anteil von mindestens 50 Gew.-% an der Zusammensetzung.

Zur Polymerisation werden die Monomere so gewählt, dass die resultierenden Polymere bei Raumtemperatur oder höheren Temperaturen als Haftklebemassen eingesetzt werden können, insbesondere derart, dass die resultierenden Polymere haftklebende Eigenschaften entsprechend dem "Handbook of Pressure Sensitive Adhesive Technology" von Donatas Satas (van Nostrand, New York 1989) besitzen.

Zur Erzielung einer bevorzugten Glasübergangstemperatur $T_G$ der Polymere von $T_G \leq 10$ °C werden entsprechend dem vorstehend gesagten die Monomere sehr bevorzugt derart ausgesucht und die mengenmäßige Zusammensetzung der Monomermischung vorteilhaft derart gewählt, dass sich nach der Fox-Gleichung (G1) (vgl. T. G. Fox, Bull. Am. Phys. Soc. 1 (1956) 123) der gewünschte $T_G$-Wert für das Polymer ergibt.

$$\frac{1}{T_G} = \sum_n \frac{W_n}{T_{G,n}} \qquad \text{(G1)}$$

Hierin repräsentiert n die Laufzahl über die eingesetzten Monomere, $W_n$ den Massenanteil des jeweiligen Monomers n (Gew.-%) und $T_{G,n}$ die jeweilige Glasübergangstemperatur des Homopolymers aus den jeweiligen Monomeren n in K.

In einer sehr bevorzugten Ausführungsform werden Acryl- oder Methacrylmomonere eingesetzt, die Acryl- und Methacrylsäureester mit Alkylgruppen, bestehend aus 4 bis 14 C-Atomen, vorzugsweise 4 bis 9 C-Atomen, umfassen. Spezifische Beispiele, ohne sich durch diese Aufzählung einschränken zu wollen, sind Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat; und deren verzweigten Isomere, wie z. B. Isobutylacrylat, 2-Ethylhexylacrylat, 2-Ethylhexylmethacrylat, Isooctylacrylat und Isooctylmethacrylat.

Weitere bevorzugt einzusetzende Verbindungsklassen sind monofunktionelle Acrylate bzw. Methacrylate von überbrückten Cycloalkylalkoholen, bestehend aus zumindest 6 C-Atomen. Die Cycloalkylalkohole können auch substituiert sein, z. B. durch $C_{1-6}$-Alkyl, Halogen oder Cyano. Spezifische Beispiele sind Cyclohexylmethacrylate, Isobomylacrylat, Isobornylmethacrylate und 3,5-Dimethyladamantylacrylat.

In einer Ausführungsform werden Monomere eingesetzt, die zumindest eine polare Gruppe wie Carboxyl, Sulfon- und Phosphonsäure, Hydroxy-, Lactam und Lacton, N-substituiertes Amid, N-substituiertes Amin, Carbamat-, Epoxy-, Thiol-, Ether, Alkoxy-, Cyan oder ähnliches tragen.

Moderate basische Monomere sind z. B. N,N-Dialkyl-substituierte Amide, wie z. B. N,N-Dimethylacrylamid, N,-N-Dimethylmethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Buthoxymethyl)methacrylamid, N-Methylolacrylamid, N-(Ethoxymethyl)acrylamid und N-Isopropylacrylamid , wobei diese Aufzählung nicht abschließend ist.

Weitere bevorzugte Beispiele sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Glyceridylmethacrylat, Phenoxyethylacrlylat, Phenoxyethylmethacrylat, 2-Butoxyethylmethacrylat, 2-Butoxyethylacrylat, Cyanoethylmethacrylat, Cyanoethylacrylat, Gycerylmethacrylat, 6-Hydroxyhexylmethacrylat, Vinylessigsäure, Tetrahydrofurfurylacrylat, β-Acryloyloxypropionsäure, Trichloracrylsäure, Fumarsäure, Crotonsäure, Aconitsäure und Dimethylacrylsäure, wobei diese Aufzählung nicht abschließend ist.

Weiterhin werden in einer weiteren Ausführungsform Photoinitiatoren mit einer copolymerisierbaren Doppelbindung eingesetzt. Als Photoinitiatoren sind Norrish Typ I und II geeignet. Beispiele sind z. B. Benzoinacrylat und ein acryliertes Benzophenon der Fa. UCB (Ebecryl P 36®). Diese Aufzählung ist nicht vollständig. Im Prinzip können alle dem Fachmann bekannten Photoinitiatoren copolymerisiert werden, die das Polymer über einen Radikalmechnismus unter UV-Bestrahlung vernetzen können.

In einer weiteren sehr bevorzugten Ausführungsform werden als Monomere Vinylester, Vinylether, Vinylhalogenide, Vinylidenhalogenide, Vinylverbindungen mit aromatischen Cyclen und Heterocyclen in α-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril.

In einer weiteren bevorzugten Ausführungsform werden zu den beschriebenen Comonomeren Monomere

hinzugesetzt, die eine hohe statische Glasübergangstemperatur besitzen. Als Komponenten eigenen sich aromatische Vinylverbindungen, wie z. B. Styrol, wobei bevorzugt die aromatischen Kerne aus $C_4$ bis $C_{18}$ bestehen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Mischungen aus diesen Monomeren, wobei diese Aufzählung nicht abschließend ist.

Zur Herstellung der Poly(meth)acrylathaftklebemassen werden vorteilhaft konventionelle radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich für diesen Zweck jedoch alle dem Fachmann geläufigen, üblichen Initiatoren für Acrylate. Die Produktion von C-zentrierten Radikalen ist im Houben Weyl, Methoden der Organischen Chemie, Vol. E 19a, S. 60 - 147 beschrieben. Diese Methoden werden in bevorzugter Weise in Analogie angewendet.

Beispiele für Radikalquellen sind Peroxide, Hydroperoxide und Azoverbindungen. Als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropylpercarbonat, t-Butylperoktoat, Benzpinacol. In einer sehr bevorzugten Ausführungsform wird als radikalischer Initiator 1,1'-Azo-bis-(cyclohexancarbonsäurenitril) (Vazo 88™ der Fa. DuPont) oder Azodisobutyronitril (AIBN) verwendet.

Zur Herstellung der Polyacrylate können aber auch prinzipiell alle kontrolliert oder lebend verlaufenden Polymerisationen eingesetzt werden, ebenso auch Kombinationen verschiedener kontrollierter Polymerisationsverfahren. Hierbei seien z. B., ohne den Anspruch auf Vollständigkeit zu besitzen, neben der anionischen Polymerisation die ATRP, die Nitroxid/TEMPO-kontrollierte Polymerisation oder mehr bevorzugt der RAFT-Prozess genannt.

Zur Radikalstabilisierung werden in günstiger Vorgehensweise Nitroxide des Typs (Ia) oder (Ib) eingesetzt:

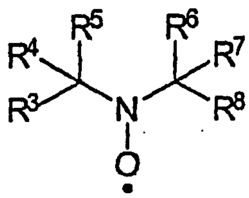

(Ia)

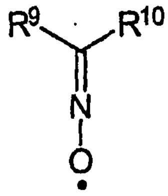

(Ib)

wobei $R^3$, $R^4$, $R^5$, $R^6$, $R^7$, $R^8$, $R^9$, $R^{10}$ unabhängig voneinander gewählt werden und folgende Verbindungen oder Atome bedeuten:

i) Halogenide, wie z. B. Chlor, Brom oder Iod;
ii) lineare, verzweigte, cyclische und heterocyclische Kohlenwasserstoffe mit 1 bis 20 Kohlenstoffatomen, die gesättigt, ungesättigt oder aromatisch sein können;
iii) Ester $-COOR^{11}$, Alkoxide $-OR^{12}$ und/oder Phosphonate $-PO(OR^{13})_2$,

wobei $R^{11}$, $R^{12}$ oder $R^{13}$ für Reste aus der Gruppe ii) stehen.

Verbindungen der (Ia) oder (1b) können auch an Polymerketten jeglicher Art gebunden sein.

Stärker bevorzugt werden kontrollierte Regler für die Polymerisation von Verbindungen des Typs:

- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL;
- 2,2,6,6-Tetramethyl-1-piperidinyloxy pyrrolidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl;
- N-tert.-Butyl-1-phenyl-2-methyl propyl nitroxid;

- N-tert.-Butyl-1-(2-naphtyl)-2-methyl propyl nitroxid;
- N-tert.-Butyl-1-diethylphosphono-2,2-dimethyl propyl nitroxid;
- N-tert.-Butyl-1-dibenzylphosphono-2,2-dimethyl propyl nitroxid;
- N-(1-Phenyl-2-methyl propyl)-1-diethylphosphono-1-methyl ethyl nitroxid;
- Di-t-Butylnitroxid;
- Diphenylnitroxid;
- t-Butyl-t-amyl nitroxid.

Eine Reihe weiterer Polymerisationsmethoden, nach denen die Haftklebemassen in alternativer Vorgehensweise hergestellt werden können, lassen sich aus dem Stand der Technik wählen:

US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum IUPAC World-Polymer Meeting 1998, Gold Coast).

Als weitere kontrollierte Polymerisationsmethode lässt sich in vorteilhafter Weise zur Synthese der Blockcopolymere die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

Die mittleren Molekulargewichte $M_n$ der bei der Polymerisation entstehenden Haftklebemassen werden sehr bevorzugt derart gewählt, dass sie in einem Bereich von 20.000 bis 2.000.000 g/mol liegen; speziell für die weitere Verwendung als Schmelzhaftkleber werden Haftklebemassen mit mittleren Molekulargewichten $M_n$ von 100.000 bis 500.000 g/mol hergestellt. Die Bestimmung des mittleren Molekulargewichtes erfolgt über Größenausschlußchromatographie (SEC) oder Matrix-unterstützte Laser-Desorption/Ionisations-Massenspektrometrie (MALDI-MS).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (z. B. Hexan, Heptan, Octan, Isooctan), aromatische Kohlenwasserstoffe (z. B. Benzol, Toluol, Xylol), Ester (z. B. Essigsäureethylester, Essigsäurepropyl-, -butyl- oder -hexylester), halogenierte Kohlenwasserstoffe (z. B. Chlorbenzol), AlKanole (z. B. Methanol, Ethanol, Ethylenglycol, Ethylenglycolmonomethylether) und Ether (z. B. Diethylether, Dibutylether) oder Gemische davon. Die wässerigen Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - zwischen 4 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initüerung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Ein anderes vorteilhaftes Herstellungsverfahren für die Polyacrylathaftklebemassen ist die anionische Polymerisation. Hier werden als Reaktionsmedium bevorzugt inerte Lösungsmittel verwendet, wie z. B. aliphatische und cycloaliphatische Kohlenwasser stoffe oder auch aromatische Kohlenwasserstoffe.

Für eine UV-Vernetzung werden bevorzugt UV-Photoinitiatoren zugesetzt. Die Photoinitiatoren können vom Typ Norrish 1 oder Norrish 11 sein. Einige Gruppen von Photoinitiatoren seien im folgenden aufgezählt: Benzophenon-,

Acetophenon-, Benzil-, Benzoin-, Hydroxyalkylphenon-, Phenylcyclohexylketon-, Anthrachinon-, Trimethylbenzoyl phosphinoxid-, Methylthiophenylmorpholinketon-, Aminoketone-, Azobenzoine, Thioxanthon-, Hexarylbisimidazol-, Triazin- oder Fluorenon, wobei jeder dieser Reste zusätzlich mit einem oder mehreren Halogenatomen und/oder einer oder mehreren Alkoxygruppen und/oder einer oder mehreren Aminogruppen oder Hydroxygruppen substituiert sein kann. Ein repräsentativer Überblick wird in "Photoinitiation Photopolymerization and Photocuring, Fundamentals and Applications, von J.-P. Fouassier, Hanser Publishers, München, Wien , New York 1995" gegeben. Ergänzend kann betrachtet werden "Chemistry & Technology of UV & EB formulation for Coatings, Inks & Paints, Volume 5, A. Carroy, C. Decker, J.P. Dowling, P. Pappas, B. Monroe, ed. by P.K.T. Oldring, publ. By SITA Technology, London, England 1994".

Für die Vernetzung mit actinischer Strahlung wird die Haftklebemasse optional mit einem Vernetzer abgemischt. Bevorzugte unter Strahlung vernetzende Substanzen gemäß dem Verfahren sind z. B. bi- oder multifunktionelle Acrylate oder bi- oder multifunktionelle Urethanacrylate oder bi- oder multifunktionelle Methacrylate. Einfache Beispiele hierfür sind 1,6-Hexandioldiacrylat, Pentaerythritoltetraacrylat, Trimethylolpropan triacrylat oder 1,2-Ethylenglycol diacrylat. Verwendet werden können hier aber auch alle weiteren, dem Fachmann geläufigen bi- oder multifunktionellen Verbindungen, die in der Lage sind, Polyacrylate unter Strahlung zu vernetzen.

Für die Veränderung der klebtechnischen Eigenschaften der hergestellten Poly(meth)acrylate als Haftklebemassen werden die Polymere zur Optimierung optional mit zumindest einem Harz abgemischt. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

In einer weiteren vorteilhaften Weiterentwicklung werden zu der Haftklebemasse ein oder mehrere Weichmacher, wie z. B. niedermolekulare Polyacrylate, Phthalate, wasserlösliche Weichmacher oder Weichharze hinzudosiert.

Die Acrylathaftklebemassen können des weiteren mit einem oder mehreren Additiven wie Alterungsschutzmitteln, Lichtschutzmitteln, Ozonschutzmittein, Fettsäuren, Harzen, Keimbildnern, Blähmitteln, Compoundierungsmitteln und/oder Beschleunigern abgemischt sein. Weiterhin können sie mit einem oder mehreren Füllstoffen wie Fasern, Ruß, Zinkoxid, Titandioxid, Voll- oder Hohlglas(mikro)kugeln, Mikrokugeln aus anderen Materialien, Kieselsäure, Silikaten und Kreide versetzt sein, wobei auch der Zusatz von blockierungsfreien lsocyanaten möglich ist.

Insbesondere für das beschriebene Verfahren ist es von Vorteil, wenn das. Polyacrylat aus der Schmelze beschichtet wird.

Hierfür werden die wie im vorhergehenden beschriebenen Poly(meth)acrylate zu einem Hotmelt aufkonzentriert, Dieser Prozess findet bevorzugt in einem Aufkonzentrationsextruder statt. Hier wird das Lösemittel unter vermindertem Druck abgezogen, wobei beispielsweise Ein- oder Doppelschneckenextruder eingesetzt werden können, die vorteilhaft das Lösemittel in verschiedenen oder gleichen Vakuumstufen abdestillieren und über eine Feedvorwärmung verfügen. Nach der Aufkonzentration beträgt der Lösungsmittelgehalt bevorzugt $\leq$2 Gew.-%, besonders bevorzugt $\leq$0,5 Gew.-%.

Zur Erzeugung der Strukturen wird durch eine wie oben beschriebene speziell ausgeformte Düse beschichtet. Die Strukturierung kann im Düsenkanal vorgenommen werden oder auch am Düsenausgang durch Austritt durch ein Raster/Gitter/Rakel etc.

Zum Erhalt der Strukturierung der Haftklebemassenoberfläche muss die Haftklebemasse sofort vernetzt werden. Die Vernetzung wird auf einer mit einem Kontakmedium versehenden Walze vorgenommen oder auf einem Trägermaterial. Für den Fall, dass auf einer Walze vernetzt wird, wird in einer bevorzugten Ausführungsform eine Kühlwalze eingesetzt. Das Kontaktmedium kann dabei entweder auf die Rückseite der Haftklebemasse oder auf die beschriebene Kühlwalze aufgetragen werden, es ist aber auch möglich, dass es berührungslos aufgebracht wird, zum Beispiel durch Aufsprühen. Eine sehr bevorzugte Verfahrensweise zur Vernetzung ist der Anmeldung DE 100 14 563 zu entnehmen.

Als Kühlwalze dient gewöhnlich eine geerdete Metallwalze, die die im Falle der Elektronenstrahlvernetzung auftreffenden Elektronen und die dabei entstehende Röntgenstrahlung absorbiert. Sie muss mit einem wirksamen Kühlsystem ausgerüstet sein, um die erheblichen Wärmemengen wegzutransportieren. Zur Verhinderung der Korrosion ist sie gewöhnlich mit einer Schutzschicht überzogen. Diese wird bevorzugt so ausgewählt, dass sie von dem Kontaktmedium gut benetzt wird. Im Allgemeinen ist die Oberfläche leitfähig. Es kann aber auch günstiger sein, sie mit einer oder mehreren Schichten aus isolierendem oder halbleitendem Material zu beschichten. Zudem sollte die Kühlfunktion sehr ausgeprägt sein, um den Haftklebeschaum zu stabilisieren. Daher wird in einer bevorzugten Ausführungsform auf Temperaturen unterhalb 25 °C, in einer sehr bevorzugten Ausführungsform auf Temperaturen unterhalb 5 °C heruntergekühlt.

Als Kontaktmedium kann dabei ein Material verwendet werden, welches in der Lage ist, einen Kontakt zwischen dem Haftklebemasse und der Walzenoberfläche herzustellen, insbesondere ein Material, welches die Hohlräume zwischen strukturierter Haftklebemasse und Walzenoberfläche ausfüllt.

Hierfür bieten sich fließfähige Materialien an, welche in einem weiten Viskositätsbereich vorliegen können. Weiterhin können weiche, "anschmiegsame" Materialien als Kontaktmedium verwendet werden. Zum einen können in bevorzugter Weise weichelastische Materialien eingesetzt werden, wie beispielsweise Weichgummi, Weich-PVC, andere Weichkunststoffe und ähnliche Materialien. Wenn sie fest mit der Kühlwalze verbunden sind, müssen sie über ausreichende Strahlenbeständigkeit sowie ausreichende thermische und elektrische Leitfähigkeit aufweisen. Erfindungsgemäß besonders vorteilhaft ist, das Kontaktmedium nicht permanent auf der Walze zu belassen, sondern vor dem Bestrahlungsprozess auf die Walze aufzubringen und nach dem Bestrahlungsprozess von dieser wieder zu entfernen. In einer weiteren günstigen Ausführungsform liegt das Kontaktmedium in Form eines austauschbaren Überzuges auf der Walze vor. Der Wechsel des Kontaktmediums kann während des Bestrahlungsprozesses (kontinuierlicher Wechsel) oder zwischen den einzelnen Bestrahlungsprozessen (diskontinuierlicher Wechsel) erfolgen. Durch den ständigen Austausch wird vermieden, dass dieses durch die laufende Bestrahlung so stark beeinträchtigt wird, dass es seine Funktion verliert.

Als erfindungsgemäß sehr vorteilhaft hat sich herausgestellt, als Kontaktmedium eine Flüssigkeit zu verwenden, die gegebenenfalls Additive für zusätzliche Funktionen erhält. Dazu gehören die Erhöhung der Benetzung und der elektrischen Leitfähigkeit sowie das Abfangen von Radikalen und anderen reaktiven Spezies, die von der absorbierten Strahlung erzeugt werden.

Als Kontaktflüssigkeit kann vorteilhaft Wasser eingesetzt werden, welches die erforderlichen Aufgaben der Erfindung erfüllt. In einer weiteren Variante werden dem Kontaktmedium Substanzen zugesetzt, die darin zumindest teilweise löslich sind. Für Wasser als Kontaktmedium bieten sich als Zusätze beispielsweise Alkylalkohole wie Ethanol, Propanol, Butanol, Hexanol an, ohne sich durch diese Beispiele in der Auswahl der Alkohole einschränken zu wollen. Weiterhin sehr vorteilhaft sind insbesondere längerkettige Alkohole, Polyglykole, Ketone, Amine, Carboxylate, Sulfonate und dergleichen.

Eine Absenkung der Oberflächenspannung kann auch durch den Zusatz geringer Mengen an nichtionischen und/oder anionischen und/oder kationischen Tensiden zu dem Kontaktmedium erreicht werden. Im einfachsten Fall lassen sich hierzu kommerzielle Spülmittel oder Seifenlösungen verwenden, bevorzugt in einer Konzentration von einigen g/l in Wasser als Kontaktmedium. Besonders geeignet sind spezielle Tenside, welche auch bei geringer Konzentration eingesetzt werden können. Hierfür seien beispielsweise Sulfoniumtenside (z. B. β-Di(hydroxyalkyl)sulfoniumsalz), weiterhin beispielsweise ethoxylierte Nonylphenylsulfonsäureammoniumsalze. Hier sei insbesondere verwiesen auf den Stand der Technik unter "surfactants" in Ullmann's Encyclopedia of Industrial Chemistry, Sixth Edition, 2000 Electronic Release, Wiley-VCH, Weinheim 2000.

Als Kontaktmedien können die vorgenannten Flüssigkeiten auch ohne den Zusatz von Wasser jeweils für sich oder in Kombination miteinander eingesetzt werden. Zur Verbesserung der Eigenschaften des Kontaktmediums (beispielsweise zur Erhöhung der Scherresistenz, Verringerung der Übertragung von Tensiden oder dergleichen auf die Lineroberfläche und damit verbesserte Reinigungsmöglichkeiten des Endproduktes) können dem Kontaktmedium und/oder den eingesetzten Zusatzstoffen weiterhin vorteilhaft Salze, Gele und ähnliche viskositätssteigernde Additive zugesetzt werden.

Für den Fall einer Flüssigkeit als Kontaktmedium kann man in hervorragender Weise vorgehen, wenn eine zweite Walze, vorteilhaft mit einer benetzbaren oder saugfähigen Oberfläche, durch ein Bad mit dem Kontaktmedium läuft, dabei mit dem Kontaktmedium benetzt oder getränkt wird und durch Berührung mit der Kühlwalze einen Film dieses Kontaktmediums aufträgt bzw. aufstreicht.

In einer für die Erfindung sehr bevorzugten Ausführungsform wird die strukturierte Haftklebemasse auf dem Kontaktmedium vernetzt. Dies kann durch Elektronenstrahlen geschehen und/oder durch UV-Bestrahlung.

Typische Bestrahlungsvorrichtungen, die bei der erfindungsgemäßen des Verfahrens mit der Elektronenstrahlvernetzung zum Einsatz kommen, stellen Linearkathodensysteme, Scannersysteme beziehungsweise Segmentkathodensysteme dar, sofern es sich um Elektronenstrahlbeschleuniger handelt. Eine ausführliche Beschreibung des Stands der Technik und der wichtigsten Verfahrensparameter findet man bei Skelhorne "Electron Beam Processing" in Vol. 1 "Chemistry & Technology of UV & EB Formulations for Coatings, Inks & Paints" publ. Sita Technology, London 1991.

Die Beschleunigungsspannungen liegen im Bereich zwischen 40 kV und 500 kV, vorzugsweise 80 kV bis 300 kV. Die angewandten Strahlungsdosen bewegen sich zwischen 5 bis 150 kGy, insbesondere 20 bis 100 kGy.

Durch das Verfahren unter Verwendung einer Kühlwalze können die zur Vernetzung erforderlichen Strahlendosen bedeutend höher gewählt werden gegenüber konventionellen Vemetzungsmethoden.

Weiterhin ist Gegenstand des erfinderischen Verfahrens die UV-Vemetzung mittels kurzzeitiger ultravioletter Bestrahlung in einem Wellenlängenbereich von 200 bis 450 nm, insbesondere unter Verwendung von Quecksilber-Hochdruck- oder -Mitteldruck-Lampen bei einer Leistung von 80 bis 240 W/cm, vorzunehmen. Zur UV-Vemetzung kann aber auch monochromatische Strahlung in Form von Lasern verwendet werden. Um Überhitzungen zu vermeiden kann

es angebracht sein, den UV-Strahlengang teilweise abzuschatten. Weiterhin können spezielle Reflektoren Systeme eingesetzt werden, die als Kaltlichtstrahler fungieren um somit Überhitzungen zu vermeiden.

Nach der Vernetzung werden die strukturierten Haftklebemassen auf ein Trägermaterial aufgebracht oder mit einer weiteren Haftklebemasse lamininiert.

Das Heranführen der Trägermaterialien ist vorteilhafterweise unter einem gewissen Andruck vorzunehmen. Hierdurch wird sichergestellt, daß einerseits keine Luftblasen eingeschlossen werden, und andererseits die Menge der Kontaktflüssigkeit auf das notwendige Maß begrenzt wird. Der Andruck kann durch Einstellung einer geeigneten Bahnspannung oder durch Anpressen mit einer Walze erreicht werden. In diesem Fall muss die Oberfläche der Anpresswalze eine ausreichende Releasewirkung aufweisen, damit die auf der Oberfläche des Trägers befindliche Haftklebeschicht nicht hiermit verklebt. Weitere Möglichkeiten wären ein Anpressen durch Luftstrahl oder Luftkissen oder durch elektrostatische Kräfte.

Neben den beschriebenen Verfahren der Beschichtung auf eine mit einem Kontaktmedium versehenden Walze sowie der Vernetzung auf dieser Walze mit anschließendem Übertrag auf das Trägermaterial lässt sich die strukturierte Haftklebemasse auch direkt auf ein Trägermaterial beschichten und dort vernetzen.

Als Trägermaterialien für die strukturierte Haftklebemasse, beispielsweise als Verwendung für Haftklebebänder, werden die dem Fachmann geläufigen und üblichen Materialien, wie Folien (Polyester, PET, PE, PP, BOPP, PVC), Vliese, Schäume, Gewebe und Gewebefolien sowie Trennpapier (Glassine, HDPE, LDPE) verwendet. Diese Aufzählung ist nicht abschließend.

Für das erfinderische Verfahren ist es sehr vorteilhaft, wenn der Zeitraum zwischen Strukturierung in oder nach der Düse und Vernetzung besonders kurz gehalten wird. In einer bevorzugten Ausführungsform findet die Vernetzung in weniger als 5 Sekunden nach der Strukturierung statt und somit in einem kontinuierlichen Verfahren.

Weiterhin kann es für das erfinderische Verfahren von Vorteil sein, wenn die durch den Austritt austretende und strukturierte heiße Acrylathaftklebemasse direkt abgekühlt wird. Dies geschieht am besten durch Kühlen mit Luft oder durch die beschriebene Kühlwalze mit Kontaktmedium oder durch eine Kühlwalze, die in einer bevorzugten Ausführungsform ebenfalls ein Kontaktmedium enthält und womit das Trägermaterial des Haftklebeverbundes herabgekühlt wird.

Durch das erfinderische Verfahren lassen sich ebenfalls orientierte strukturierte Haftklebemasse herstellen. Hierfür werden in einer bevorzugten Ausführungsform Haftklebemassen mit einem hohen mittleren Molekulargewicht durch eine Düse beschichtet. Durch die Geometrie der Düse sowie der Reckung auf eine geringere Schichtdicke lässt sich eine Orientierung der strukturierten Haftklebemasse besonders bevorzugt in Maschinenrichtung erzielen, die durch die direkte Abkühlung und sofortige Vernetzung mit Elektronenstrahlen oder UV-Licht eingefroren wird. Solche strukturierten Haftklebemassen weisen ein verstärktes anisotropes Verhalten auf, welches z. B. auch die Zug-Dehn-Charakteristik der Haftklebemasse betrifft.

Im Weiteren wird die Verwendung der nach dem erfinderischen Verfahren hergestellten strukturieren Haftklebemasse als Haftklebeband beansprucht.

Insbesondere ist die Verwendung der wie beschrieben hergestellten Haftklebemassen oder -schäume für ein Klebeband von Vorteil, wobei die Haftklebemasse ein- oder beidseitig auf einem Träger aufgetragen sein kann.

Strukturierte Haftklebebänder können viele Vorteile aufweisen. Durch die Strukturierung wird die Verklebungsfläche reduziert und somit lassen sich solche Haftklebebänder sehr gut repositionieren. Weiterhin besitzen diese Haftklebebänder auch ein geringeres Aufziehverhalten, so dass eine weitere Anwendung die wiederablösbare Verklebungen sind (temporäre Verklebungen mit Haftklebebändern).

Des Weiteren können die anisotropen Eigenschaften genutzt werden, z. B. bei der Entfernung von Haftklebebändern von einem Substrat, da in Längsrichtung das Haftklebeband eine andere Klebkraft besitzt als in Querrichtung. Daher kann es für den Ablösvorgang von Vorteil sein, das Haftklebeband in Richtung der geringeren Klebkraft zu entfernen. Der Anwender benötigt somit eine geringere Kraft für diesen Vorgang. Bei Auftreten von Scherkräften oder Beanspruchung des Haftklebebandes in eine Richtung kann dann wiederum die Richtung so gewählt werden, dass das Haftklebeband in Beanspruchungsrichtung eine höhere Klebkraft besitzt.

Die Erfindung wird nachfolgend anhand von Beispielen näher erläutert.

## Beispiele

### Herstellung der Acrylathaftklebemasse 1

Ein für radikalische Polymerisationen konventioneller 200 L-Reaktor wurde mit 2400 g Acrylsäure, 3200 g N-tert.-Butylacrylamid, 4000 g Methylacrylat, 30,4 kg 2-Ethylhexylacrylat, und 30 kg Aceton/Isopropanol (97 : 3) befüllt. Nach 45 Minuten Durchleiten mit Stickstoffgas unter Rühren wurde der Reaktor auf 58 °C hochgeheizt und 20 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 20 g AIBN hinzugegeben. Die Reaktion wurde nach 48 h Reaktionszeit abgebrochen und auf Raumtemperatur abgekühlt. Anschließend wurde die Haftklebemasse vom Lösemittel unter Erwärmung sowie Anlegen eines Vakuums vom Lösemittel befreit. Der Restlösemittelanteil lag bei < 0,5 %.

Herstellung der Acrylathaftklebemasse 2

Ein für radikalische Polymerisationen konventioneller 200 L-Reaktor wurde mit 3600 g Acrylsäure, 36,4 kg 2-Ethylhexylacrylat, und 30 kg Aceton/Isopropanol (97 : 3) befüllt. Nach 45 Minuten Durchleiten mit Stickstoffgas unter Rühren wurde der Reaktor auf 58 °C hochgeheizt und 20 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 20 g AIBN hinzugegeben. Die Reaktion wurde nach 48 h Reaktionszeit abgebrochen und auf Raumtemperatur abgekühlt. Anschließend wurde die Haftklebemasse vom Lösemittel unter Erwärmung sowie Anlegen eines Vakuums vom Lösemittel befreit. Der Restlösemittelanteil lag bei < 0,5 %.

Beschichtung

Die Acrylathotmelts wurden mit Hilfe eines Einschneckenextruders (L/D: 27) gefördert. Es wurde durch eine Düse mit einem 300 μm-Schlitz beschichtet, die entsprechend Fig. 1 (b) aufgebaut war. An der oberen Austrittslippe wurde somit die Strukturierung der Haftklebemasse vorgenommen. Auf einer Breite von 30 cm wurde eine 100 μm tiefe Struktur eingefräst Aus dieser Breite enthielt die Düse 60 Zacken, so dass die Grundfläche von jedem Zacken 0,5 cm betrug.

Der auf diese Weise strukturierte Haftschmelzkleber wurde auf eine 23 μm und mit Corona vorbehandelte PET-Folie direkt laminiert. Der durchschnittliche Masseauftrag belief sich auf 50 g/m$^2$. Die PET-Folie wird während der Beschichtung über eine Kühlwalze geführt. Die Temperatur der Kühlwalze belief sich auf ca. 4 °C. Anschließend wurde der Verbund im In-line-Verfahren direkt mit Elektronenstrahlen vernetzt.

Elektronenbestrahlung

Die Elektronenbestrahlung erfolgte mit einem Gerät der Fa. Electron Crosslinking AB, Halmstad, Schweden. Die zu bestrahlende Haftklebemasse wurde dabei über eine Kühlwalze unter dem Lenard-Fenster des Beschleunigers hindurch geführt. Dabei wurde in der Bestrahlungszone der Luftsauerstoff durch Spülen mit reinem Stickstoff verdrängt. Die Bahngeschwindigkeit betrug 10 m/min. Es wurde bei einer Beschleunigungsspannung von 180 kV mit 50 kGy vernetzt.

Verklebung

Die Prüfung der Schälfestigkeit (Klebkraft) erfolgte gemäß PSTC-1. Ein 2 cm breiter Streifen dieses Musters wird auf eine Stahlplatte durch dreimaliges doppeltes Überrollen mittels einer 2 kg-Rolle verklebt. Die Platte wird eingespannt und der Selbstklebestreifen über sein freies Ende an einer Zugprüfmaschine unter einem Schälwinkel von 180° mit einer Geschwindigkeit von 300 mm/min abgezogen. Zur Überprüfung der anisotropen Eigenschaften wurden die Haftklebebandstreifen einmal in Längs und einmal in Querrichtung geschnitten. Die Ergebnisse sind in Tabelle 1 zusammengefasst.

Tabelle 1

| | KK-längs [N/cm] | KK-quer [N/cm] |
|---|---|---|
| Beispiel 1 | 2,1 | 3,2 |
| Beispiel 2 | 1,9 | 2,8 |
| KK = Klebkraft in Newton/cm<br>längs = Maschinenrichtung/Beschichtungsrichtung<br>quer = Quer zur Maschinenrichtung/Beschichtungsrichtung | | |

**Patentansprüche**

1. Verfahren zur Herstellung von strukturierten Haftklebemassen, wobei die Haftklebemasse aus der Schmelze durch

eine Düse beschichtet wird, durch die Düse strukturiert wird und anschließend mit actinischer Strahlung vernetzt wird, **dadurch gekennzeichnet, dass**
runde, ovale, eckige, rechteckige, quadratische, dreieckige oder sägezahnförmige Strukturen auf der Haftklebemassenoberfläche erzeugt werden.

**2.** Verfahren nach Anspruch 1, **dadurch gekennzeichnet, dass** die Strukturierungen in Beschichtungsrichtung vorgenommen werden.

**3.** Verfahren nach einem der vorangegangenen Ansprüche, **dadurch gekennzeichnet, dass** nach der Strukturierung mit Elektronenstrahlen vernetzt wird.

**4.** Verfahren nach einem der Ansprüche 1 oder 2, **dadurch gekennzeichnet, dass** nach der Strukturierung mit UV-Strahlung vernetzt wird.

**5.** Verfahren nach einem der vorangegangenen Ansprüche, **dadurch gekennzeichnet, dass** auf einem Trägermaterial vernetzt wird.

**6.** Verfahren nach einem der vorangegangenen Ansprüche, **dadurch gekennzeichnet, dass** die strukturierte Haftklebemasse auf einer rotierenden Walze abgekühlt wird.

**7.** Verfahren nach Anspruch 6, **dadurch gekennzeichnet, dass** auf der rotierenden Walze ein Kontaktmedium aufgetragen wird und nach der Bestrahlung mit actinischer Strahlung wieder zumindest teilweise entfernt wird.

**8.** Verfahren nach einem der vorangegangenen Ansprüche, **dadurch gekennzeichnet, dass** als Haftklebemasse eine Acrylathaftklebemasse verwendet wird.

**9.** Verwendung einer nach einem der vorangegangenen Ansprüche hergestellten strukturierten Haftklebemasse zur Herstellung von Haftklebebändern.

## Claims

**1.** Method of producing structured pressure-sensitive adhesives, the pressure-sensitive adhesive being coated from the melt through a die, the die being structured, followed by crosslinking with actinic radiation, **characterized in that** circular, oval, angular, rectangular, square, triangular or sawtoothlike structures are generated on the surface of the pressure-sensitive adhesive.

**2.** Method according to Claim 1, **characterized in that** the structuring is performed in the coating direction.

**3.** Method according to either of the preceding claims, **characterized in that** structuring is followed by crosslinking with electron beams.

**4.** Method according to either of Claims 1 and 2, **characterized in that** structuring is followed by crosslinking with UV radiation.

**5.** Method according to any one of the preceding claims, **characterized in that** crosslinking takes place on a backing material.

**6.** Method according to any one of the preceding claims, **characterized in that** the structured pressure-sensitive adhesive is cooled on a rotating roll.

**7.** Method according to Claim 6, **characterized in that** a contact medium is applied to the rotating roll and is at least partly removed again following exposure to actinic radiation.

**8.** Method according to any one of the preceding claims, **characterized in that** an acrylate pressure-sensitive adhesive is used.

**9.** Use of a structured pressure-sensitive adhesive produced according to any one of the preceding claims for producing

pressure-sensitive adhesive tapes.

**Revendications**

1. Procédé de production de matières auto-adhésives structurées, où la matière auto-adhésive est revêtue à partir de la masse fondue à travers une filière, structurée par la filière et ensuite réticulée avec un rayonnement actinique, **caractérisé en ce que** des structures circulaires, ovales, angulaires, rectangulaires, carrées, triangulaires ou en dents de scie sont produites sur la surface d'une matière auto-adhésive.

2. Procédé selon la revendication 1, **caractérisé en ce que** les structurations sont réalisées dans la direction du revêtement.

3. Procédé selon l'une quelconque des revendications précédentes, **caractérisé en ce que** la structuration est suivie d'une réticulation avec des faisceaux d'électrons.

4. Procédé selon l'une quelconque des revendications 1 ou 2, **caractérisé en ce que** la structuration est suivie d'un rayonnement UV.

5. Procédé selon l'une quelconque des revendications précédentes, **caractérisé en ce que** la réticulation est effectuée sur une matière de support.

6. Procédé selon l'une quelconque des revendications précédentes, **caractérisé en ce que** la matière auto-adhésive structurée est refroidie sur un cylindre rotatif.

7. Procédé selon la revendication 6, **caractérisé en ce qu'**un milieu de contact est appliqué sur le cylindre rotatif et est retiré de nouveau, au moins partiellement, après l'irradiation avec un rayonnement actinique.

8. Procédé selon l'une quelconque des revendications précédentes, **caractérisé en ce qu'**une matière auto-adhésive d'acrylate est utilisée en tant que matière auto-adhésive.

9. Utilisation d'une matière auto-adhésive structurée produite selon l'une quelconque des revendications précédentes, pour la production de rubans auto-adhésifs.

Fig. 1

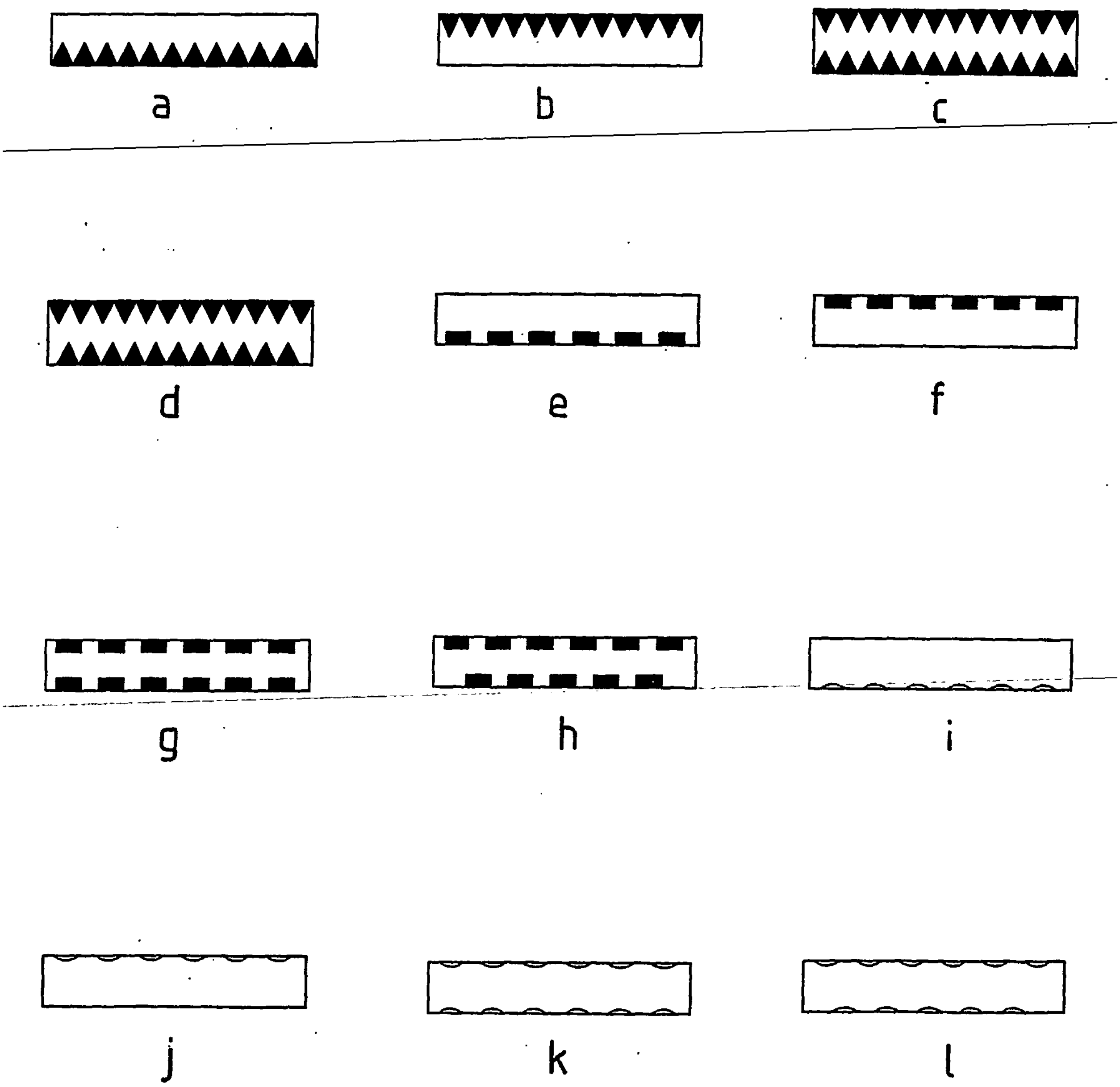

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5910392 A
- US 5861231 A
- US 4968581 A
- US 4883740 A
- US 4810613 A
- US 4491628 A
- DE 10008844
- DE 10008840
- WO 0202709 A
- EP 0670356 A
- DE 10008844 A
- WO 0153422 A
- US 4581429 A
- WO 9813392 A1
- EP 735052 A1
- WO 9624620 A1
- WO 9844008 A1
- DE 19949352 A1
- EP 0824111 A1
- EP 826698 A1
- EP 824110 A1
- EP 841346 A1
- EP 850957 A1
- US 5945491 A
- US 5854364 A
- US 5789487 A
- DE 10014563


### In der Beschreibung aufgeführte Nicht-Patentliteratur


- **T. G. FOX.** *Bull. Am. Phys. Soc.,* 1956, vol. 1, 123
- **HOUBEN WEYL.** *Methoden der Organischen Chemie,* vol. E 19a, 60-147
- **HAWKER.** *Beitrag zur Hauptversammlung der American Chemical Society,* 1997
- **HUSEMANN.** Beitrag zum IUPAC World-Polymer Meeting. *Gold Coast,* 1998
- **VON J.-P. FOUASSIER.** *Photoinitiation Photopolymerization and Photocuring, Fundamentals and Applications,* 1995
- Chemistry & Technology of UV & EB formulation for Coatings. Inks & Paints. P.K.T. Oldring, publ. By SITA Technology, 1994, vol. 5
- **VON DONATAS SATAS.** Handbook of Pressure Sensitive Adhesive Technology. 1989
- Ullmann's Encyclopedia of Industrial Chemistry. Electronic Release. Wiley-VCH, 2000
- Electron Beam Processing. **SKELHORNE.** Chemistry & Technology of UV & EB Formulations for Coatings, Inks & Paints. publ. Sita Technology, 1991, vol. 1